# EUROPEAN PATENT APPLICATION

(11) **EP 2 383 625 A1**
(43) Date of publication of application: **02.11.2011**
(21) Application number: 10161682.9
(22) Date of filing: 30.04.2010
(51) Int. Cl.: G06F 1/16, G06F 1/18, H01R 13/717

(54) **Lighted port**

(71) Applicant: Research In Motion Limited, Waterloo, ON N2L 3W8 (CA)
(72) Inventor: Schellenberg, Amy, Waterloo Ontario N2L 3XE (CA)
(74) Representative: Phillips, Emily Elizabeth

(57) **Abstract**

A method is provided for illuminating a port on an electronic device. The method comprises an actuator on the electronic device receiving an input, and the actuator causing a light source on the electronic device to illuminate the port.

## Description

### BACKGROUND

A USB (Universal Serial Bus) cable can provide an interface between a host device and one or more peripheral devices, such as mobile telephones, personal digital assistants, personal media players, cameras, printers, keyboards, mice, and removable media drives. Such peripheral devices may be also referred to as slave devices or downstream devices. The host device, which may also be referred to as a master device or an upstream device, is typically a computer system such as a personal computer. Alternatively, the host device could be an adapter that can plug into a wall outlet and provide power to a peripheral device. Any such host or peripheral component will be referred to herein as a device or an electronic device. The "male" portion of a USB connection will be referred to herein as a plug, and the "female" portion of a USB connection will be referred to herein as a port.

USB permits devices to be attached to each other, automatically configured upon detection of their attachment, and detached from each other while still in operation. In other words, USB provides "hot-plugging" support that includes automatic configuration. The automatic configuration might include a handshaking procedure in which the host device determines the speed and device class of the peripheral device. The host device might then load an appropriate device driver based on the class of the peripheral device.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figures 1a - 1d illustrate an electronic device with a light source and port, according to an embodiment of the disclosure.

Figure 2 is a flowchart for a method for illuminating a port on an electronic device, according to an embodiment of the disclosure.

Figure 3 illustrates a processor and related components suitable for implementing the several embodiments of the present disclosure.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

In some situations, the ambient light level may be inadequate for a user of a device to easily see a port into which a cable can be inserted into the device. For example, if a device user attempts to insert a cable into a port in a dark room or outdoors at night, the user may not be able to discern the location or orientation of the port. Embodiments of the present disclosure can assist the user in such a situation in locating the port, orienting the cable, and successfully inserting the cable into the port.

More specifically, embodiments of the present disclosure provide methods and mechanisms for illuminating a port on a device. A light-emitting component may be located in various places in or near a port, and the light-emitting component may be activated in various ways in order to illuminate the port. As used herein, terms such as "illuminate the port" and the like refer to providing and/or directing light for the specific purpose of making a port more visible in dark environments and do not necessarily refer to providing ambient lighting that may or may not make a port more visible. Also, it should be understood that, while the discussion herein may mention USB cables and devices with USB ports, the embodiments described herein are also applicable to other cable and port configurations.

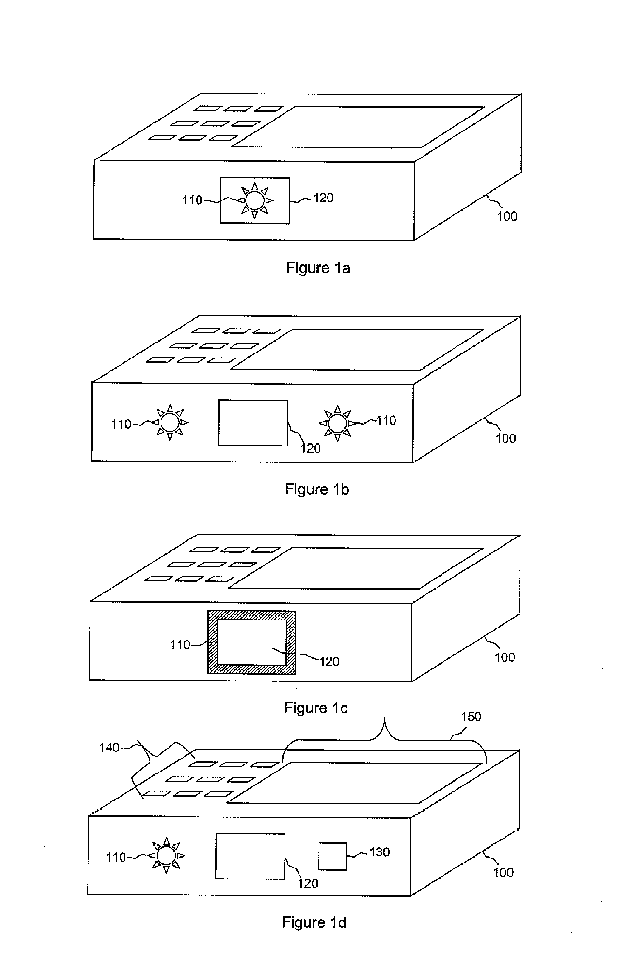

Figures 1a - 1c illustrate example embodiments of locations where a light-emitting component could be situated on a portable electronic device 100 in order to illuminate a port on the device 100. In Figure 1a, a light source 110 is located in the interior portion of a port 120, such as in the back wall or one of the side walls of the port 120. In Figure 1b, two light sources 110 are located near and exterior to the port 120. In other cases the light source 110 might be located beside, below, or above the port 120. In other embodiments of this example, one light source 110 or more than two light sources 110 might be present near the port 120. In Figure 1c, the light source 110 is a continuous component that is adjacent to the port 120 on all sides. Although show substantially surrounding the port in Figure 1c, in some cases the light source 110 might be long just one or more sides of the port 120. Other configurations that allow the light source 110 to illuminate the port 120 may be apparent to one of skill in the art.

In any of these or other configurations, the light source 110 might be a light-emitting diode or a similar component that can fit into or onto the portable device 100 and can produce sufficient light to illuminate the port 120 in a dark environment. The light source might be any of a variety of types of lights and light emitting devices or systems well known to those skilled in the art. The light might be variously or multi-colored and might be colored differently from other lights on the device to more readily identify the light source 110 as being associated with the port 120. In other embodiments, the light source 110 and port 120 might be located on a device that is not portable. Also, while the light source 110 and port 120 are shown on the side of the device 100, in other embodiments, the light source 110 and port 120 could be located elsewhere on the device 100.

In various embodiments, the activation of the light source 110 can occur in a number of different ways and might be either automatic or manual. In the case of automatic activation, a detection component may be present that can automatically detect when the light source 110 should begin emitting light. The detection component may then communicate with an activation component that causes the light source 110 to turn on. In the case of manual activation, only the activation component may be present. Hereinafter, the term "actuator" might be used to refer to the detection component alone, to the activation component alone, or to a combination of the detection component and the activation component.

Figure 1d illustrates an example of a configuration of the light source 110, the port 120, and an actuator 130. While the actuator 130 is shown adjacent to the port 120, in other embodiments, as discussed below, the actuator 130 could be in other locations. The actuator 130 might be able to perform some or all of the processing logic described below, or some or all of the processing might be performed by the device 100 in which the actuator 130 is located.

In some embodiments, the light source 110 is automatically activated when a cable is brought into proximity with the port 120. That is, the light source 110 may begin emitting light in order to light the port 120 when a cable and the device 100 are brought near to one another. The device user need not perform any actions beyond those typically involved in inserting a cable into the port 120 and need not have any intention to activate the light source 110. The user can merely bring the cable into the general area of where the port 120 is known to be located, and the light source 110 will automatically turn on and allow the user to see the exact location and orientation of the port 120. In other embodiments, the light source 110 might be automatically activated in other ways.

In one automatic activation embodiment, an electromagnetism-based actuator 130 is provided. That is, the actuator 130 may be able to detect the metal in the shield, conducting lines, or other metallic portions of a cable. When the actuator 130 detects metal within a predefined distance from the port 120, the actuator 130 turns on the light source 110. In a variation of this embodiment, rather than detecting metal in general, the actuator 130 might detect a radio frequency identification (RFID) tag or a similar identification component in a cable.

In another automatic activation embodiment, a motion-based actuator 130 is provided. That is, the actuator 130 may be able to detect motion that is consistent with a cable approaching the port 120. When a user performs a motion that is typically performed when a cable is inserted into a port, the actuator 130 detects this motion, assumes that a cable is being inserted into the port 120, and turns on the light source 110. For example, some desktop computers and game systems may be able to recognize motions made by people nearby. If a motion-based actuator 130 is present on such a computer or game system, the actuator 130 might recognize when a user appears to be inserting a cable and might activate the light source 110.

In yet another automatic activation embodiment, an ambient light-based actuator 130 is provided. That is, the actuator 130 may be able to detect the ambient light level in the environment in which the device 100 is located and might turn on the light source 110 when the ambient light level drops below a predefined level. In this embodiment, the light source 110 might turn on only when the device 100 itself is on. The light source 110 might turn off when the device 100 is turned off or when the ambient light level rises above the predefined level.

In still another automatic activation embodiment, the light source 110 might be activated based on the time of day. That is, the actuator 130 and/or the processor for the device 100 may include a clock that keeps track of the date and the current time of day. The actuator 130 and/or the processor for the device 100 may also be aware of the user's current location and of the amount of daylight potentially available at that place at that time on that date. With this information, the actuator 130 may be aware of whether it is currently day or night and may automatically turn the light source 110 on at night and automatically turn the light source 110 off during the day.

In other embodiments, the device user performs an action on the actuator 130 that is specifically intended to cause the light source 110 to be activated. Such a deliberate action will be referred to herein as a manual action even if the user performs no manipulation by hand. In one such manual activation embodiment, the actuator 130 is a button or similar component that the user can press or similarly manipulate to activate the light source 110. The button or other component might be depressible or touch-sensitive. Such an actuator 130 may be a standalone button that is near the port 120, as shown in an exemplary location in Figure 1d, or that is elsewhere on the device 100. Alternatively, such an actuator 130 may be one of a plurality of buttons on or near a keypad 140 of the device 100. In these cases, the button might be dedicated to turning on the light source 110. In an alternative, the user might activate the light source 110 by pressing, either simultaneously or consecutively, a predefined combination of keys on the keypad 140 of the device 100. In this case, the keys may typically perform other functions and may turn on the light source 110 only when the appropriate combination of keys is pressed. In some cases, the light source 110 might automatically turn on in response to any keys or buttons on the device being presses.

In another manual activation embodiment, the device 100 might be equipped with a touch-sensitive screen 150. The user might trace a predefined pattern on the screen 150 in order to provide an input to the actuator 130 and thereby activate the light source 110.

In yet another manual activation embodiment, the actuator 130 might include an accelerometer or a similar component that can detect gestures that the user makes while holding the device 100. In this embodiment, the user might perform a predefined gesture with the device 100 in order to activate the light source 110. For example, the user might shake the device 100 up and down a certain number of times, twist the device 100 a certain number of times, or perform some other predefined gesture.

In still another manual activation embodiment, a voice-based actuator 130 is provided. That is, the actuator 130 may be able to detect voice commands provided by the device user and may turn on the light source 110 when the user voices an appropriate command.

In other embodiments, various combinations of these methods and mechanisms might be used. For example, an ambient light-based actuator 130 might detect that the ambient light level is above the level at which the light source 110 is set to turn on and might not turn the light source 110 on. If the device user wished for the light source to turn on in such a case, the user might be able to perform one or more of the manual actions described above to override the ambient light-based actuator 130 and manually cause the light source 110 to turn on. In another example, an ambient light-based actuator 130 might prevent the manual or automatic activation mechanisms from being effective unless the ambient light level is below the predetermined level.

Also, in any of the embodiments described above, the light source 110 might automatically turn off when a plug is successfully inserted into the port 120. That is, when insertion of a cable is complete, additional light from the light source 110 might no longer be needed, and the light source 110 can be turned off to save energy.

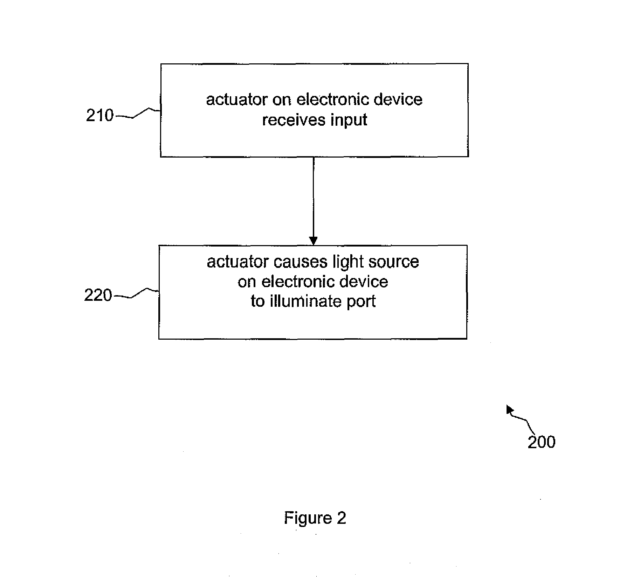

Figure 2 illustrates an embodiment of a method 200 for illuminating a port on an electronic device. At block 210, an actuator on the electronic device receives an input. The input might be an automatic input such as the detection by the actuator of a cable in the vicinity of the port. Alternatively, the input might be a manual input such as the pressing of a button on the electronic device or other actuations or inputs as described above. At block 220, after detecting the input, the actuator causes a light source on the electronic device to illuminate the port.

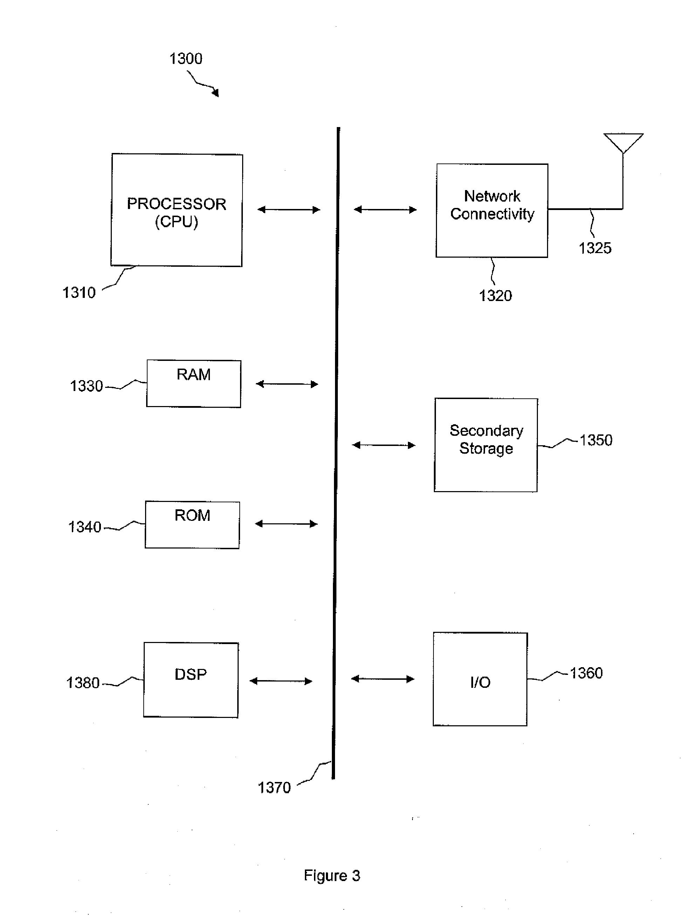

The devices described above might include a processing component that is capable of executing instructions related to the actions described above. Figure 3 illustrates an example of a system 1300 that includes a processing component 1310 suitable for implementing one or more embodiments disclosed herein. In addition to the processor 1310 (which may be referred to as a central processor unit or CPU), the system 1300 might include network connectivity devices 1320, random access memory (RAM) 1330, read only memory (ROM) 1340, secondary storage 1350, and input/output (I/O) devices 1360. These components might communicate with one another via a bus 1370. In some cases, some of these components may not be present or may be combined in various combinations with one another or with other components not shown. These components might be located in a single physical entity or in more than one physical entity. Any actions described herein as being taken by the processor 1310 might be taken by the processor 1310 alone or by the processor 1310 in conjunction with one or more components shown or not shown in the drawing, such as a digital signal processor (DSP) 1380. Although the DSP 1380 is shown as a separate component, the DSP 1380 might be incorporated into the processor 1310.

The processor 1310 executes instructions, codes, computer programs, or scripts that it might access from the network connectivity devices 1320, RAM 1330, ROM 1340, or secondary storage 1350 (which might include various disk-based systems such as hard disk, floppy disk, or optical disk). While only one CPU 1310 is shown, multiple processors may be present. Thus, while instructions may be discussed as being executed by a processor, the instructions may be executed simultaneously, serially, or otherwise by one or multiple processors. The processor 1310 may be implemented as one or more CPU chips.

The network connectivity devices 1320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, digital subscriber line (xDSL) devices, data over cable service interface specification (DOCSIS) modems, and/or other well-known devices for connecting to networks. These network connectivity devices 1320 may enable the processor 1310 to communicate with the Internet or one or more telecommunications networks or other networks from which the processor 1310 might receive information or to which the processor 1310 might output information.

The network connectivity devices 1320 might also include one or more transceiver components 1325 capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component 1325 might include separate receiving and transmitting units or a single transceiver. Information transmitted or received by the transceiver component 1325 may include data that has been processed by the processor 1310 or instructions that are to be executed by processor 1310. Such information may be received from and outputted to a network in the form, for example, of a computer data baseband signal or signal embodied in a carrier wave. The data may be ordered according to different sequences as may be desirable for either processing or generating the data or transmitting or receiving the data. The baseband signal, the signal embedded in the carrier wave, or other types of signals currently used or hereafter developed may be referred to as the transmission medium and may be generated according to several methods well known to one skilled in the art.

The RAM 1330 might be used to store volatile data and perhaps to store instructions that are executed by the processor 1310. The ROM 1340 is a non-volatile memory device that typically has a smaller memory capacity than the memory capacity of the secondary storage 1350. ROM 1340 might be used to store instructions and perhaps data that are read during execution of the instructions. Access to both RAM 1330 and ROM 1340 is typically faster than to secondary storage 1350. The secondary storage 1350 is typically comprised of one or more disk drives or tape drives and might be used for non-volatile storage of data or as an over-flow data storage device if RAM 1330 is not large enough to hold all working data. Secondary storage 1350 may be used to store programs that are loaded into RAM 1330 when such programs are selected for execution.

The I/O devices 1360 may include liquid crystal displays (LCDs), touch screen displays, keyboards, keypads, switches, dials, mice, track balls, voice recognizers, card readers, paper tape readers, printers, video monitors, or other well-known input/output devices. Also, the transceiver 1325 might be considered to be a component of the I/O devices 1360 instead of or in addition to being a component of the network connectivity devices 1320.

In an embodiment, a method is provided for illuminating a port on an electronic device. The method comprises an actuator on the electronic device receiving an input, and the actuator causing a light source on the electronic device to illuminate the port.

In another embodiment, an electronic device is provided. The electronic device includes a port, a light source, and an actuator. The actuator is configured, in response to receiving an input, to cause the light source to illuminate the port.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method for illuminating a port on an electronic device, comprising:
an actuator on the electronic device receiving an input; and
the actuator causing a light source on the electronic device to illuminate the port.

2. The method of claim 9, wherein the input is at least one of:
automatic; and
manual.

3. The method of claim 2, wherein, when the input is automatic, the input is a detection by the actuator of at least one of:
a cable being brought into proximity with the port, the detection occurring via detection of a metallic component in the cable;
a motion consistent with the cable approaching the port;
an ambient light level below a predefined level; and
a date, time of day, and current location of the electronic device consistent with a lack of daylight at the current location of the electronic device.

4. The method of claim 2, wherein, when the input is manual, the input is at least one of:
a press of at least one button on the electronic device;
a tracing of a pattern on a touch-sensitive screen on the electronic device;
a performance of a gesture with the electronic device; and
an articulation of a voice command.

5. The method of claim 4, wherein, when the input is the press of at least one button on the electronic device, the at least one button is at least one of:
a button dedicated to providing the input to the actuator; and
a combination of keys on a keypad of the electronic device, wherein pressing the combination of keys provides the input to the actuator.

6. The method of claim 1, wherein emission of light from the light source stops when a plug is inserted into the port.

7. The method of claim 1, wherein the port is a Universal Serial Bus (USB) port.

8. An electronic device, comprising:
a port;
a light source; and
an actuator configured, in response to receiving an input, to cause the light source to illuminate the port.

9. The electronic device of claim 8, wherein the input is at least one of:
automatic; and
manual.

10. The electronic device of claim 9, wherein, when the input is automatic, the input is a detection by the actuator of at least one of:
a cable being brought into proximity with the port, the detection occurring via detection of a metallic component in the cable;
a motion consistent with the cable approaching the port;
an ambient light level below a predefined level; and
a date, time of day, and current location of the electronic device consistent with a lack of daylight at the current location of the electronic device.

11. The electronic device of claim 9, wherein, when the input is manual, the input is at least one of:
a press of at least one button on the electronic device;
a tracing of a pattern on a touch-sensitive screen on the electronic device;
a performance of a gesture with the electronic device; and
an articulation of a voice command.

12. The electronic device of claim 11, wherein, when the input is the press of at least one button on the electronic device, the at least one button is at least one of:
a button dedicated to providing the input to the actuator; and
a combination of keys on a keypad of the electronic device, wherein pressing the combination of keys provides the input to the actuator.

13. The electronic device of claim 8, wherein the actuator stops emission of light from the light source when a plug is inserted into the port.

14. The electronic device of claim 8, wherein the port is a Universal Serial Bus (USB) port.

## Amended claims

### Amended claims in accordance with Rule 137(2) EPC.

**1.** A method for illuminating a port (120) on an electronic device (100), comprising:
an actuator (130, 140) on the electronic device (100) receiving an input; and
the actuator (130, 140) causing a light source (110) on the electronic device (100) to illuminate the port (120),
wherein the input is at least one of:
a detection by the actuator (130, 140) of a cable being brought into proximity with the port (120), the detection occurring via detection of a metallic component in the cable; and
at least one of a date, time of day, and current location of the electronic device (100) consistent with a lack of daylight at the current location of the electronic device (100).

**2.** The method of claim 1, wherein the input is at least one of:
automatic; and
manual.

**3.** The method of claim 2, wherein the actuator (130,140) is an electromagnetism-based actuator.

**4.** The method of claim 2, wherein, when the input is manual, the input further includes at least one of:
a press of at least one button on the electronic device (100);
a tracing of a pattern on a touch-sensitive screen (150) on the electronic device (100);
a performance of a gesture with the electronic device (100); and
an articulation of a voice command.

**5.** The method of claim 4, wherein, when the input is the press of at least one button on the electronic device (100), the at least one button is at least one of:
a button dedicated to providing the input to the actuator (130, 140); and
a combination of keys on a keypad of the electronic device (100), wherein pressing the combination of keys provides the input to the actuator (130, 140).

**6.** The method of claim 1, wherein emission of light from the light source (110) stops when a plug is inserted into the port (120).

**7.** The method of claim 1, wherein the port (120) is a Universal Serial Bus (USB) port.

**8.** An electronic device (100), comprising:
a port (120);
a light source (110) located in an interior portion of the port (120); and
an actuator (130,140) configured, in response to receiving an input, to cause the light source (110) to illuminate the port (120),
wherein emission of light from the light source stops when the input is inserted into the port (120).

**9.** The electronic device (100) of claim 8, wherein the input is at least one of:
automatic; and
manual.

**10.** The electronic device (100) of claim 9, wherein, when the input is automatic, the input is a detection by the actuator (130,140) of at least one of:
a cable being brought into proximity with the port (120), the detection occurring via detection of a metallic component in the cable;
a motion consistent with the cable approaching the port (120);
an ambient light level below a predefined level; and
a date, time of day, and current location of the electronic device (100) consistent with a lack of daylight at the current location of the electronic device (100).

**11.** The electronic device (100) of claim 9, wherein, when the input is manual, the input is at least one of:
a press of at least one button on the electronic device (100);
a tracing of a pattern on a touch-sensitive screen (150) on the electronic device (100);
a performance of a gesture with the electronic device (100); and
an articulation of a voice command.

**12.** The electronic device (100) of claim 11, wherein, when the input is the press of at least one button on the electronic device (100), the at least one button is at least one of:
a button dedicated to providing the input to the actuator (130, 140); and
a combination of keys on a keypad of the electronic device (100), wherein pressing the combination of keys provides the input to the actuator (130,140).

**13.** The electronic device of claim 8, wherein the actuator (130,140) is an electromagnetism-based actuator.

**14.** The electronic device (100) of claim 8, wherein the port (120) is a Universal Serial Bus (USB) port.
